Europäisches Patentamt

European Patent Office

Office européen des brevets

(19)

(11) Veröffentlichungsnummer: **0 152 055 B1**

(12) **EUROPÄISCHE PATENTSCHRIFT**

(45) Veröffentlichungstag der Patentschrift:
03.05.89

(51) Int. Cl.⁴: **G 01 G 19/413**, G 01 G 19/40

(21) Anmeldenummer: **85101197.3**

(22) Anmeldetag: **06.02.85**

(54) **Ladenwaagenverbundanlage.**

(30) Priorität: **11.02.84 DE 3404948**

(43) Veröffentlichungstag der Anmeldung:
**21.08.85 Patentblatt 85/34**

(45) Bekanntmachung des Hinweises auf die Patenterteilung:
**03.05.89 Patentblatt 89/18**

(84) Benannte Vertragsstaaten:
**AT BE CH DE FR GB IT LI NL SE**

(56) Entgegenhaltungen:
**DE-A- 3 147 274**

**IBM TECHNICAL DISCLOSURE BULLETIN, Band 24, Nr. 2, Juli 1981, Seiten 976-978, New York, US; M.E. CHAMOFF et al.: "Dynamic self-optimizing price lookup for retail terminal system"**

(73) Patentinhaber: **Bizerba-Werke Wilhelm Kraut GmbH & Co. KG., Wilhelm-Kraut-Strasse 41, D-7460 Balingen 1 (DE)**

(72) Erfinder: **Selb, Fritz, Dipl.-Ing. (FH), Kirchhofer Weg 18, D-7801 Pfaffenweiler (DE)**
Erfinder: **Blocher, Harald, Narzissenstrasse 11, D-7463 Rosenfeld 6 (DE)**
Erfinder: **Sauter, Herbert, Dipl.-Ing. (FH), Kirchstrasse 7, D-7209 Deilingen (DE)**

(74) Vertreter: **Hoeger, Stellrecht & Partner, Uhlandstrasse 14 c, D-7000 Stuttgart 1 (DE)**

## Beschreibung

Die Erfindung betrifft eine Ladenwaagenverbundanlage aus mehreren an eine Zentraleinheit angeschlossenen Ladenwaagen mit Waagenspeichern für Artikelsätze, insbesondere Artikelgrundpreise, und mit Nummern-Abruftastatur für die Artikelsätze, wobei die Waagenspeicher nur für eine Teilmenge der in der Zentraleinheit gespeicherten Gesamtmenge der Artikelsätze ausgelegt sind (DE-A 3 147 274).

Eine solche Anlage ermöglicht die kunden-, kassen-, waagen-, abteilungs-, bediener- und artikelbezogene Verkaufsdatenerfassung und Verarbeitung in Ladengeschäften, insbesondere im Frischwarenbereich. Eine solche computergesteuerte Anlage erfasst insbesondere auf sichere Weise wichtige Daten des Einkaufs- und Verkaufsvorganges und ermöglicht ein schnelles Abrufen betriebswirtschaftlicher Informationen. An jeder Ladenwaage kann dabei möglichst ohne längere Wartezeit über eine mehrstellige Abrufnummer auf alle gespeicherten Daten der in dem betreffenden Ladengeschäft angebotenen Artikel – «Artikelsätze» – zugegriffen werden. Alle wichtigen Informationen, wie z.B. Grundpreis eines Artikels, Stückpreis eines Artikels, Artikeltext, Artikelumsatz nach Gewicht bzw. Stück oder Betrag, Umsätze nach Warengruppen und Verkaufsstellen (Waage oder Abteilung) können in einer solchen Anlage gespeichert und ausgewertet werden. Unter dem Grundpreis eines Artikels versteht man den Preis pro Gewichtseinheit, z.B. kg; unter Artikeltext versteht man einen bestimmten, dem betreffenden Artikel zugeordneten Text, der z.B. im Verlaufe des Verkaufsvorganges auf einen für den Kunden bestimmten Bon ausgedruckt wird. Des weiteren können in einer solchen Verbundanlage die Umsatzzahlen der einzelnen Ladenwaagen-Bediener und Kunden in einem Zentralspeicher der Zentraleinheit abgespeichert werden. Die gespeicherten Daten werden auf Anforderung kumuliert und auf Anzeigen, Drucker und/oder an eine übergeordnete EDV-Anlage weitergegeben. Insbesondere eignen sich solche Ladenwaagenverbundanlagen für Fleischereien und Grossmärkte mit Frischwarenabteilungen.

Eine derartige Ladenwaagenverbundanlage ist bei der Aufstellung mehrerer Ladenwaagen erforderlich, um die Artikeldaten («Artikelsätze») zentral von einem Terminal der Zentraleinheit aus pflegen und die Verkaufsauswertung für die gesamten Artikel, die gesamten Waagenbediener und alle Waagen sowie eventuelle Ladenkassen zentral erfassen zu können. So muss beispielsweise bei einer Preisänderung der neue Preis sofort an allen Einzelwaagen gelten.

Jede Waage verfügt über eine Abruftastatur, an welcher über z.B. dreistellige Nummern die Artikelsätze, also z.B. Artikelgrundpreise für die Preisberechnung und Artikeltexte für einen Bonabdruck abgerufen werden können. An den Terminal der Zentraleinheit sollen dabei möglichst viele Waagen angeschlossen werden können.

Die Pflege der Artikelsätze und die Verkaufsdatenauswertung kann auch über eine Datenleitung von einer übergeordneten EDV-Anlage vorgenommen werden.

Es ist bereits bekannt, Waren unter Zuhilfenahme sogenannter «Artikelnummern» zu verkaufen. Dabei wird nicht mehr der spezifische Grundpreis der Ware an einer Tastatur der Waage eingegeben, was häufig ein zeitraubender Vorgang ist, sondern lediglich eine Nummer, welche dem Artikel zugeordnet ist. Unter dieser Nummer sind der Grundpreis, der Artikeltext, die Warengruppenzuordnung, die erzielte Verkaufszahl des Artikels und dergleichen gespeichert (DE-OS 3 149 818).

Bei einer bekannten Ladenwaagenverbundanlage (DE-OS 3 044 394) sind mehrere Ladenwaagen in einer Sternschaltung an eine Zentraleinheit angeschlossen (CTS-System). Alle Artikel werden durch die Zentraleinheit gepflegt und sind in deren Speicher abgespeichert. Die einzelnen Ladenwaagen benötigen dabei keinen internen, unmittelbar an der Waage angeordneten Artikelspeicher («Waagenspeicher»). Jeder Artikel, der an einer Waage über seine Artikelnummer abgerufen wird, muss über eine Datenleitung bei der Zentraleinheit abgefragt werden. Die Artikelsätze werden dann an die Waage übermittelt, wobei z.B. aus einem übermittelten Grundpreis und dem an der Waage gemessenen Gewicht einer Ware der Preis der Ware errechnet und angezeigt wird. Die Verkaufsdaten werden alsdann wieder an die Zentraleinheit zurück übermittelt.

Dabei können folgende Nachteile auftreten: Von jeder Einzelwaage aus muss ein Datenkabel bis zur Zentraleinheit geführt oder es muss ein «schneller Ringverbund» eingesetzt werden. Jede Ladenwaage benötigt eine Schnittstelle an der Zentraleinheit. All dies verlangt einen grossen Aufwand an Hardware. Weiterhin wird das Netzwerk der Verbundanlage stark belastet, da alle Daten von der Zentraleinheit geholt und dort sofort wieder abgelegt werden müssen. Bei einem Ausfall der Anlage ist kein Weiterarbeiten mit Artikelnummern mehr möglich. Schliesslich müssen verhältnismässig grosse Antwortzeiten nach dem Abruf der Artikel in Kauf genommen werden.

Es ist zur teilweisen Behebung dieser Mängel auch schon bekannt, in jede einzelne Waage einen Waagenspeicher mit Nummernabruf (PLU-Speicher) einzubauen, wobei dieser Speicher jedoch die Artikelsätze für alle Artikel, die irgendwann einmal an der betreffenden Waage verkauft werden, enthalten muss. Jede einzelne Ladenwaage wird also von der Zentraleinheit aus mit allen Artikelsätzen beschickt, die voraussichtlich irgendwann einmal an der Waage benötigt werden. An der Waage wird dann mit Hilfe der Nummern-Abruftastatur der Artikelsatz (Grundpreis und Artikeltext) aus dem eigenen Waagenspeicher abgerufen. Ferner werden in diesem Waagenspeicher auch unmittelbar die Verkaufsdaten gespeichert. Änderungen der Artikelsätze müssen, gegebenenfalls gesteuert von der Zentraleinheit, im Speicher der betreffenden Waage vorgenommen werden. Bei der Tagesabrechnung werden die Daten der einzelnen Waagen von der Zentraleinheit geholt und abgespeichert.

Auch bei dieser Verbundanlage ist, insbesondere mit Bezug auf die benötigten Datenkabel, ein erheblicher Aufwand erforderlich. Jede Waage muss mit einem grossen internen Waagenspeicher ausgerüstet werden, um eine grosse Anzahl von Artikeln speichern zu können. An einer Waage können immer nur zusammenhängende Blöcke von Artikelnummern gespeichert werden, d.h. die Waage kann einen Artikel ausserhalb dieses Blockbereiches nicht abrufen. Es muss bereits im voraus entschieden werden, welche Artikelbereiche von einer Ladenwaage erfasst werden können. Schliesslich ist das Netzwerk (Datenbus) der Anlage beim Speichern und Entspeichern der Waagenspeicher stark belastet.

Aus der DE-A1 3 147 274 ist ferner eine Anlage mit unabhängigen Ladenwaagen mit PLU-Abspeicherung bekannt, wobei einzelne Ladenwaagen einen Teil der PLU-Speicher selbst enthalten können, während die restlichen PLU-Speicher Teil eines Zentralcomputers sein können. Die den einzelnen Ladenwaagen zugeordneten PLU-Speicher können für solche Waren verwendet werden, die für die betreffende Ladenwaage spezifisch sind oder besonders häufig vorkommen. Ein Nachteil dieser Anlage besteht darin, dass die den einzelnen Waagen zugeordneten Speicher nicht ohne weiteres an variierende Verkaufsbedingungen und insbesondere nicht an sich ändernde Warensortimente anpassbar sind.

Der Erfindung liegt die Aufgabe zugrunde, den geschilderten Mängeln bekannter Waagenverbundanlagen abzuhelfen und eine solche Anlage so zu verbessern, dass sie einerseits mit wesentlich kleinerer Kapazität der Waagenspeicher auskommt, andererseits aber diese Waagenspeicher weitgehend automatisch an Modifizierungen der Verkaufsbedingungen und eines sich ständig ändernden Artikelsortiments anpassbar sind.

Die Aufgabe wird erfindungsgemäss dadurch gelöst, dass den Waagenspeichern Zählwerke zugeordnet sind, welche die Anzahl der Abrufe der einzelnen Artikelsätze zählen und speichern, und dass eine Waagenspeicher-Verwaltungseinheit den oder die Artikelsätze mit den niedrigsten Abrufzahlen aus den Waagenspeichern entfernt und so neuen Speicherraum in diesen Speichern für weitere Artikelsätze schafft.

Hierdurch lassen sich u.a. folgende Vorteile erzielen: Die Datenkabel zu den einzelnen Ladenwaagen und Interface-Anschlüssen am Terminal der Zentraleinheit lassen sich reduzieren. Der Datenverkehr wird entlastet, was eine Reduzierung der Wartezeiten beim Artikelabruf bedeutet. An jeder Ladenwaage besteht trotz kleinerer Speicherkapazität Zugriffmöglichkeit auf alle Artikel. Eine Zwischenspeicherung von Einzelbons eines Kunden an verschiedenen Ladenwaagen und Abruf eines Gesamtbons von einer beliebigen Waage (oder Ladenkasse) aus, ist möglich.

Die Verkaufsdaten bezüglich Artikel, Warengruppen, Bediener bzw. Kunden und Waagen können gespeichert werden. Die Anlage lässt sich leicht bedienen und schliesslich können die einzelnen Ladenwaagen auch nach einem Ausfall der Zentraleinheit weiter arbeiten.

Die nachstehende Beschreibung einer bevorzugten Ausführungsform der Erfindung dient im Zusammenhang mit beiliegender Zeichnung, die schematisch eine Ladenwaagenverbundanlage zeigt, der weiteren Erläuterung.

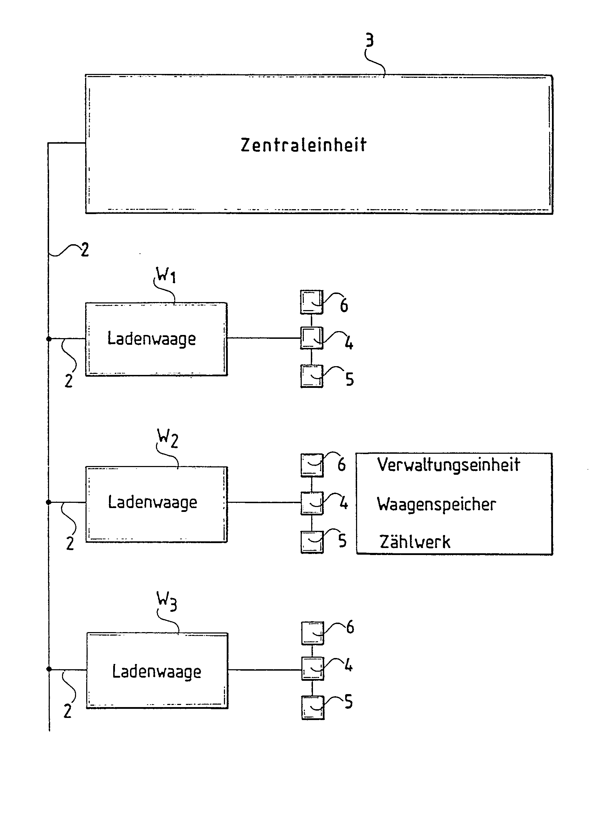

Wie auf der Zeichnung schematisch dargestellt, sind mehrere Ladenwaagen W1, W2, W3, ... über ein Netzwerk oder Datenkabel 2 (Bussystem) mit einer Zentraleinheit 3 verbunden. Jede Waage W weist in an sich bekannter Weise eine Nummern-Abruftastatur für Artikelsätze, insbesondere Artikelgrundpreise, auf. Die Zentraleinheit 3 ist in an sich bekannter Weise mit einem Zentralspeicher gekoppelt, der alle wichtigen Artikel- und Verkaufsdaten speichert. Jede Waage W ist mit einem internen Waagenspeicher 4 für Artikelsätze ausgestattet. Im Waagenspeicher 4 kann eine begrenzte Teilmenge des gesamten, im Zentralspeicher der Zentraleinheit 3 gespeicherten Artikelstamms gespeichert werden. Der Waagenspeicher 4 braucht daher nur eine verhältnismässig kleine Kapazität zu haben. Jedem Waagenspeicher 4 ist ein Zählwerk 5 zugeordnet, welches die Anzahl der Abrufe der einzelnen Artikelsätze zählt und speichert. Schliesslich ist jeder Waagenspeicher 4 noch mit einer Waagenspeicher-Verwaltungseinheit 6 verbunden, welche unter Ausnutzung des Speicherzustandes im Speicher 4 und im Zählwerk 5 den oder die Artikelsätze mit den niedrigsten Abrufzahlen aus den Waagenspeichern 4 entfernt und so neuen Speicherraum für weitere Artikelsätze schafft. Die Verwaltungseinheit 6 dient weiterhin der jeweils erforderlichen Aktualisierung des Zählwerks 5.

Der Abruf der Artikelsätze an der Abruftastatur der Waage W erfolgt durch Eintasten einer mehrstelligen Artikelnummer.

Die Speicher der Zentraleinheit 3 und der einzelnen Ladenwaagen W1, W2, W3 ... sind gegen Netzausfall geschützt, so dass die Daten auch bei Spannungsausfall oder beim Abschalten der Anlage erhalten bleiben.

Zur Datenpflege weist die Zentraleinheit 3 in an sich bekannter Weise ein Terminal mit einer Alpha-Tastatur und eine Anzeige auf, so dass die Daten eingegeben, gepflegt und ausgewertet werden können. Die Ausgabe der Daten erfolgt über Drucker, die an den einzelnen Ladenwaagen und an der Zentraleinheit vorgesehen sein können. Die Daten können auch über eine Datenleitung von einer übergeordneten EDV-Anlage gepflegt werden. Das Terminal der Zentraleinheit 3 kann in diesem Fall entfallen.

Des weiteren verfügt die Zentraleinheit 3 über eine Schnittstelle zu den einzelnen Ladenwaagen. Die Schnittstelle besteht aus einem seriellen Ausgang und einem seriellen Eingang ohne Steuerleitungen. Das Datenkabel 2, welches einen schnellen Ringverbund vermittelt, hat vier Adern und wird an jeder Waage über einen Eingangs- und Ausgangsstecker durch die Waage hindurch geführt. Die einzelnen Waagen sind seriell miteinander gekoppelt.

Ziel der Verbundanlage ist es, alle Artikel über Nummern abzurufen, so dass insbesondere keine einzelnen Grundpreise mehr eingegeben werden müssen. Daher muss jede Waage Zugriff auf alle Artikeldaten des Gesamtverbundsystems haben. Der entsprechende Grundpreis muss sofort nach Abruf des Artikels verfügbar sein, um eine prompte Preisrechnung durchführen zu können. Des weiteren muss zur Aktualisierung der Daten die Ladenwaage Zugriff haben zu allen sonstigen relevanten Daten, z.B. Warengruppen, Bediener (Verkäufer), Kunden, usw.

Die Artikelsätze brauchen in den einzelnen Ladenwaagen nicht nach Artikelnumerierung (PLU-Nummer) abgelegt zu werden, sie können vielmehr in beliebiger Reihenfolge angeordnet werden, da diese Numerierung Teil des Datensatzes ist.

Zu Beginn des Betriebes der dargestellten und beschriebenen Verbundanlage sind die Waagenspeicher 4 der einzelnen Waagen W leer. Wird nun aufgrund eines Verkaufsvorganges an einer bestimmten Waage ein Artikel abgerufen, so wird der betreffende Artikelsatz in der Zentraleinheit 3 abgefragt, übertragen und im Waagenspeicher 4 der betreffenden Waage gespeichert. Dies geschieht mit allen nach und nach auftretenden Artikelsätzen solange, bis der Waagenspeicher 4 gefüllt ist. Wird dann von einem Kunden ein bereits im Waagenspeicher 4 gespeicherter Artikel erneut verlangt, so werden die entsprechenden Daten aus dem Waagenspeicher 4 bezogen. Ein Rückgriff auf den Zentralspeicher der Zentraleinheit 3 ist nicht mehr erforderlich.

Werden nunmehr aufgrund weiterer Kundenwünsche zusätzliche, noch nicht im Waagenspeicher 4 gespeicherte Artikelsätze benötigt, so werden diejenigen Artikelsätze mit der geringsten Verkaufsfrequenz, d.h. mit der geringsten Abrufhäufigkeit, durch die Waagenspeicher-Verwaltungseinheit 6 aus den Waagenspeichern 4 entfernt, wodurch neuer Speicherraum für weitere Artikelsätze geschaffen wird. Der vom Kunden neu verlangte Artikelsatz kann somit im Waagenspeicher 4 gespeichert werden.

Die Waagenspeicher-Verwaltungseinheit 6 funktioniert folgendermassen: Sie «beobachtet» dauernd die Belegung des Waagenspeichers 4 und überträgt bei fehlender freier Speicherkapazität diejenigen Artikelsätze, welche längere Zeit nicht benötigt wurden, zur Aktualisierung an die Zentraleinheit 3, so dass immer ein oder mehrere Speicherplätze im Waagenspeicher 4 für neue Artikelsätze frei sind. Somit kann nach Bedarf des Waagenbetriebes ein neuer Artikelsatz von der Zentraleinheit geholt und im Waagenspeicher 4 gespeichert werden.

Zur Festlegung des oder der Artikelsätze mit den niedrigsten Abrufzahlen, welche also demnächst ausgelagert werden können, dienen die zu jedem Waagenspeicher 4 gehörenden Zählwerke 5. Bei Zugriff auf den n-ten-Artikelsatz von maximal möglichen Artikelsätzen im Waagenspeicher 4 wird jeder einem bestimmten Artikel zugeordneter Zähler des Zählwerks 5, mit Ausnahme des dem n-ten zugeordneten Zählers, um 1 erniedrigt.

Der am wenigsten frequentierte Artikelsatz ist derjenige, der den niedrigsten Zählerstand hat. Voraussetzung dafür ist, dass bei Übernahme eines neuen Artikelsatzes in den Waagenspeicher 4 der zugehörige Zähler mit dem maximal möglichen Zählerstand belegt wird. Ist der Zähler auf seinem niedrigsten Wert angekommen, wird die Erniedrigung des entsprechenden Zählers nicht weiter durchgeführt.

Die Grösse oder Kapazität der Waagenspeicher 4 wird je nach den in dem betreffenden Ladengeschäft vorliegenden Umständen empirisch bestimmt, und zwar unter Beachtung der Abrufhäufigkeit der einzelnen Artikelsätze, der zulässigen Busbelastung, der Zugriffszeit auf die Artikelsätze und dgl. In jedem Fall ist die Kapazität eines Waagenspeichers 4 erheblich geringer als die Kapazität des der Zentraleinheit 3 zugeordneten Zentralspeichers.

Für die optimale Auslegung der Anlage muss von der Ladenwaage mit dem breitesten Artikelspektrum eine Funktion der Zugriffshäufigkeit über alle Artikel aufgenommen werden. Danach wird die maximale Datenbus-Belastung bei maximaler Antwortzeit unter Abzug eines Sicherheitsfaktors festgelegt. Hieraus lässt sich dann leicht in herkömmlicher Weise die minimale Speicherkapazität des Waagenspeichers 4 bei maximal zulässiger Zugriffszeit feststellen. Bei Vergrösserung des Waagenspeichers 4 sinkt die durchschnittliche Zugriffszeit weiter ab, bis sie durch die Erfüllung des internen Organisationsaufwandes wieder steigt. In jedem Fall kann die optimale Kapazität der Waagenspeicher 4 und die notwendige Buskapazität leicht gefunden werden.

Nach dem Artikelabruf soll der Artikelsatz möglichst schnell im Waagenspeicher 4 gefunden oder es soll festgestellt werden, ob der Artikelsatz (noch) nicht vorhanden ist und extern von der Zentraleinheit geholt werden muss. Dies erfolgt dadurch, dass die Artikel sequentiell oder über eine Indextabelle im Waagenspeicher gesucht werden. Ist der betreffende Artikelsatz im Waagenspeicher 4 nicht abgespeichert, wird er über die Datenleitung 2 vom Speicher der Zentraleinheit 3 geholt.

Ist ein Waagenspeicher 4 voll belegt, so muss einer der am seltensten frequentierten Artikelsätze ausgelagert werden. Dabei darf aber der zuletzt eingespeicherte Artikelsatz, der im zugeordneten Zähler des Zählwerks 5 erst die Abrufzahl «1» hat, nicht ausgelagert werden. Auf diese Weise können die Artikelsätze, die extern vom Computer der Zentraleinheit 3 geholt werden müssen, sofort abgespeichert werden, da im Waagenspeicher immer Platz für einen Artikel freigehalten wird. Um den am geringsten frequentierten Artikel zu finden, muss für jeden Artikel eine Abrufstatistik geführt werden. Dies erfolgt in der Weise, dass bei jedem Abruf eines Artikels der betreffende Abrufzähler um 1 erhöht wird. Dabei kann ein Byte-Zähler von 0 bis 255 verwendet werden. Ist ein Artikel bei der Zahl 255 angelangt, dann wird in dem betreffenden Zähler nicht mehr weiter addiert. Sind alle Zähler bei 0 oder 255, so wird der erste Artikel des Waagenspeichers 4 ausgelagert. Ansonsten wird der Artikel mit dem kleinsten Zählerwert (ausser dem zuletzt eingespeicherten Artikel) ausgelagert. Bei der Auslagerung werden alle Zähler auf 0 gesetzt.

Das Auslagern eines Artikels wird nach dem Einspeichern eines Artikels ausgeführt, sobald der Waagenspeicher 4 voll ist.

Um eine transparente Verkaufsdatenauswertung zu erreichen, werden die Artikel in Warengruppen eingeteilt. Die Warengruppenzuordnung wird im Artikelsatz ebenfalls gespeichert. In den Waagen können Warengruppenspeicher eingebaut sein, wobei beispielsweise zwanzig Warengruppen zugelassen werden können. Bei jedem Artikelverkauf wird das Verkaufsergebnis auf den entsprechenden Warengruppenspeicher addiert. Die Warengruppenspeicher sind für kurzfristige Verkaufsabfragen während des Betriebes bestimmt. Sobald alle Artikeldaten von den Waagen geholt worden sind, findet eine gesamte Warengruppenauswertung in der Zentraleinheit 3 statt.

Änderungen der Artikelsätze werden gleichzeitig an alle Ladenwaagen W übermittelt. In den Waagenspeichern, in denen die Artikelsätze gespeichert sind, werden die Daten entsprechend abgeändert.

An jeder Waage W werden alle wichtigen Verkaufsdaten der Waage sowie eine Nummer des Bedieners der Waage gespeichert. Ein Datensatz für eine Waage der Anlage kann folgendermassen aufgebaut sein:

Waagenadresse: physikalische Adresse, mit der die Waage über den Datenbus angesprochen wird.

Waagennummer: jeder Waagenfunktion wird eine Nummer zugeordnet, d. h. jede von zwei Bedienern bediente Waage hat zwei Waagennummern und zwei Waagensätze, jedoch nur eine physikalische Adresse.

Abteilungsnummer: jede Waagenfunktion ist einer Abteilung zugeordnet.

Bedienernummer: Nummer des derzeitigen Bedieners der betreffenden Waage.

Umsatz der nach Gewicht verkauften Artikel: gesamter Umsatz der gewichtsbezogenen Waren.

Postenzähler der nach Gewicht verkauften Artikel: verkaufte Anzahl dieser Artikel.

Umsatz der Handartikel: gesamter Umsatz der Handartikel.

Postenzähler Handartikel: Anzahl der verkauften Handartikel.

Minusbetrag in DM: gesamter Minusbetrag, der an der Waage eingegeben wurde.

Minus-Zähler: Anzahl der Minusbeträge.

Storno in DM: gesamter Stornobetrag.

Storno-Zähler: Anzahl der Stornierungen.

Kunden-Anzahl: Anzahl der bedienten Kunden.

Zeit-Zähler: Einsatzzeit der Waage und/oder des Bedieners.

Laufende Tagestotalennummer: es werden die Tagestotalen gezählt, die an der Waage gezogen wurden.

Pro Waagenfunktion ist dieser Waagensatz einmal gespeichert. In der Zentraleinheit 3 ist für die Waagendaten jeder Waage ein identischer Satz aufgebaut. An Bedienerdaten wird für jeden Bediener ebenfalls derselbe Satz aufgebaut.

Wenn der Waagensatz von der Waage zur Zentraleinheit kommt, wird die Differenz der Daten zum alten Waagensatz auf den entsprechenden Bedienersatz addiert. Der alte Waagendatensatz wird dann von neuem überschrieben.

Ist ein Bedienersatz mit einer ankommenden Bedienernummer noch nicht vorhanden, so muss dieser Satz neu eröffnet werden.

An der Waage bzw. im Waagensatz bleiben die Summenwerte erhalten, bis sie durch einen Befehl gelöscht werden.

Bei folgenden Aktionen muss der Waagensatz zum Zentralcomputer geschickt werden:

wenn der Bediener die Waage wechselt;

bei einer Abfrage der Waagen- und Bedienerdaten in der Zentraleinheit;

beim Löschen der Waagendaten in der Zentraleinheit.

Die Waagensätze müssen dabei auch gelöscht werden.

Was die Datenverwaltung eines Gesamtbons anbelangt, so besteht das Bedürfnis, für alle Verkäufe an den verschiedenen Waagen einen Gesamtbon zu erstellen, weil dies den Vorteil hat, dass an der oder den Ladenkassen nur noch ein Gesamtbetrag eingelesen werden muss.

Man verfährt folgendermassen: Die Gesamtsumme der Postenzähler und der gesamte Text des Bons wird nach Abfertigung eines Kunden an der Waage mit einer Nummer (Kundennummer, Bedienernummer oder Systemnummer) als Schlüssel an die Zentraleinheit geschickt. Dort wird ein Bon-File mit der entsprechenden Nummer und folgenden Datenfeldern eröffnet:

Schlüsselnummer   Gesamtsumme
                  Postenzähler
                  Bon-Text

Geht der Kunde zu einer anderen Waage, so werden seine Bon-Daten mit derselben Nummer an den Konzentrator geschickt.

Diese Daten werden wie folgt verarbeitet:

a) Die Gesamtsumme wird zum Gesamtsummenfeld addiert;
b) der Postenzähler wird zum Postenzählerfeld addiert;
c) der Bon-Text wird an das Ende des letzten Bon-Textes angehängt.

Soll an der letzten Waage (Abschluss einer Bedienung) der gesamte Bon gedruckt werden, so bekommt die Zentraleinheit über die Nummer die Aufforderung, die gesamten Bon-Daten zu senden.

Die Zentraleinheit sendet dann die Bon-Daten mit einer von ihm vorgegebenen Bon-Nummer an die auffordernde Ladenwaage und macht gleichzeitig, d. h. nach Gut-Quittung der Waage, den Speicherplatz wieder frei.

Durch die Erfindung werden im wesentlichen folgende Vorteile vermittelt: Bei der vorgeschlagenen Ladenwaagenverbundanlage kann an jeder Waage auf alle in der Zentraleinheit gespeicherten Daten zurückgegriffen werden. Die Kapazität des Waagenspeichers 4 ist scheinbar (virtuell) so gross wie die des Speichers in der Zentraleinheit. Gleichwohl ist an der Ladenwaage W nur ein kleiner Waagenspeicher 4 vorhanden. Die Aufrufzeiten (Responsezeiten) der Artikeldaten gehen im Mittel gegen Null. Die Waage lädt sich automatisch mit den Artikeldaten, die von ihr benötigt werden, auf und hat somit auch bei Ausfall der Anlage die richtigen Artikelsätze noch gespeichert. Durch die geringe Busbelastung ist es möglich, viele Ladenwaagen an den Datenbus anzuschliessen und ein einfaches Buskonzept zu verwenden.

**Patentanspruch**

1. Ladenwaagenverbundanlage aus mehreren an eine Zentraleinheit (3) angeschlossenen Ladenwaagen (W1, W2 ...) mit Waagenspeichern (4) für Artikelsätze, insbesondere Artikelgrundpreise, und mit Nummern-Abruftastaturen für die Artikelsätze, wobei die Waagenspeicher (4) nur für eine Teilmenge der in der Zentraleinheit (3) gespeicherten Gesamtmenge der Artikelsätze ausgelegt sind, dadurch gekennzeichnet, dass den Waagenspeichern (4) Zählwerke (5) zugeordnet sind, welche die Anzahl der Abrufe der einzelnen Artikelsätze zählen und speichern, und dass eine Waagenspeicher-Verwaltungseinheit (6) den oder die Artikelsätze mit den niedrigsten Abrufzahlen aus den Waagenspeichern (4) entfernt und so neuen Speicherraum in diesen Speichern für weitere Artikelsätze schafft.

**Claim**

1. A sales balance interconnecting installation comprising a plurality of sales balances (W1, W2 ...), having balance memories (4) for records of articles, especially basic prices of articles, and having numerical keyboards for retrieval of the article records, connected to a central unit (3), whereby the balance memories (4) are constructed to store only a portion of the total number of article records stored in the central unit (3), characterized in that associated with the balance memories (4) there are totalizers (5) which count and store the number of retrievals of the individual article records, and in that a balance memory controlling unit (6) removes the article record or records with the lowest number of retrievals from the balance memories (4) and so provides new storage space in these memories for further records of articles.

**Revendication**

1. Agencement de communication entre dispositifs de pesage dans des magasins, comprenant en liaison avec une unité centrale (3) plusieurs dispositifs de pesage (W1, W2 ...) à mémoires de pesée (4) pour des assortiments d'articles, en particulier pour des prix de base d'articles, et avec des claviers d'appel de numéros pour les assortiments d'articles, les mémoires de pesage (4) n'étant dimensionnées que pour une fraction de la totalité des assortiments d'articles mémorisée dans l'unité centrale (3), caractérisé en ce que sont adjoints aux mémoires de pesée (4) des dispositifs compteurs (5) qui comptent et mémorisent le nombre d'appels des assortiments différents d'articles, et en ce qu'une unité (6) de gestion des mémoires de pesée retire des mémoires de pesée (4) la ou les assortiments d'articles ayant les nombres d'appels les plus faibles et procure ainsi une nouvelle place de mémoire dans ces mémoires pour d'autres assortiments d'articles.

3

Zentraleinheit

2

W1

Ladenwaage

6

4

5

W2

Ladenwaage

6

4

5

| Verwaltungseinheit |
| Waagenspeicher |
| Zählwerk |

W3

Ladenwaage

6

4

5